# EUROPEAN PATENT APPLICATION

(11) **EP 1 458 191 A2**
(43) Date of publication of application: **15.09.2004**
(21) Application number: 04004353.1
(22) Date of filing: 26.02.2004
(51) Int. Cl.: H04N 7/12

(54) **Network camera embedded with hub**

(30) Priority: 08.03.2003 KR 2003014554
(71) Applicant: Sungjin C&C Co.,LTD., Seoul, 153-802 (KR)
(72) Inventor: Lim, Byeong-Jin, Seocho-ku Seoul 137-049 (KR); Lim, In-Keon, Seocho-ku Seoul 137-049 (KR); Bae, Seong-geon, Guro-ku Seoul 152-053 (KR)
(74) Representative: Eisenführ, Speiser & Partner

(57) **Abstract**

A network digital video recorder system is disclosed. The network digital video recorder system includes a plurality of network cameras each of which is embedded with a switching hub that transmits a compressed video data packet outputted from the network camera to the Ethernet.

The switching hub embedded in the network camera multiplexes a compressed video data packet outputted from the network camera and a compressed data packet outputted from a neighboring network camera to up-link the multiplexed data packets to another neighboring network camera. Accordingly, video and audio data can be transmitted to a network digital video recorder through the Ethernet without using multiple hubs.

## Description

### FIELD OF THE INVENTION

The present invention relates to a network digital video recorder system. More specifically, the invention relates to a network camera embedded with a hub or a switching hub in a network digital video recorder system.

### BACKGROUND OF THE RELATED ART

A digital video recorder compresses and stores video signals captured by a plurality of video cameras (for example, four or sixteen channels) connected by wires or displays the video signals. The digital video recorder is frequently used for the purpose of security of buildings, offices, ATMs and so on.

A video signal captured by a video camera is converted to an analog signal through a video encoder and transmitted to the digital video recorder. Then, the digital video recorder converts the analog signal to digital data through a video decoder, and compresses and stores the digital data or reproduces it.

The digital video recorder is one-to-one connected to a video camera through a cable. Accordingly, when 1600 video cameras are installed in one building, for instance, 1600 connection cables are required. When 16 channels are used, 100 digital video recorders are needed.

In the case that a specific building or area is monitored using thousands video cameras, video signals should be transmitted to a control center from the video cameras using thousands cables. However, it is not easy to install thousands cables in the building or area.

To solve this problem, a network camera and network digital video recorder (DVR) were introduced. Techniques with respect to the network DVR are disclosed in WO02080033 and Korea Patent No. 2002-0018988.

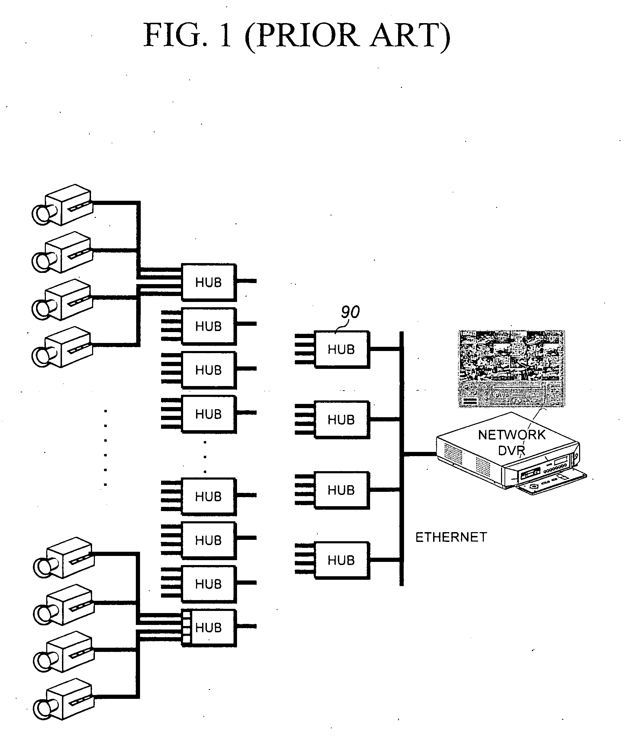

FIG.1 shows the construction of a conventional network camera. The network camera includes a camera module 30, a video encoder 40 and a data compressor 50. A compressed data packet outputted from the data compressor 50 is connected to a digital video recorder 60 through the Ethernet. Here, the camera module 30, video encoder 40 and data compressor 50 can be integrated or individually configured.

Furthermore, they can construct a simple Ethernet parallel wiring structure within a range that does not exceed the bandwidth of the Ethernet 70 using parallelism that is the characteristic of the Ethernet.

In the meantime, the data packet that is encoded and compressed by each network camera 55 is sent through the Ethernet 70 to the network digital video recorder 60. The network digital video recorder 60 reproduces the data packet or transmits it to store.

To connect the network camera 55 to the network digital video recorder 60 through the Ethernet 70, a switching hub that performs a multiplexing function is required. For example, when 1600 network cameras 55 are cascade-connected in order to use a hub 90 that accommodates four ports, 400 + 100 + 25 + 7 + 2 = 534 switching hubs are needed.

Accordingly, a large number of hubs are required in the case where network cameras are installed in a high building for security purpose. This increases the costs and makes it difficult to install the network cameras and hubs.

### SUMMARY OF THE INVENTION

An object of the present invention is to provide a network digital video recorder system having a plurality of network cameras and a network digital video recorder that receives data packets transmitted from the network cameras through the Ethernet, in which the network cameras are serially connected to the Ethernet without using hubs to easily transmit compressed video data to the network digital video recorder.

Another object of the present invention is to provide a network digital video recorder system in which a plurality of network cameras are not cascade-connected to the Ethernet using hubs but serially connected to the Ethernet and they transmit compressed video data packets to a network digital video recorder within a data transmission bandwidth of the Ethernet.

To accomplish the objects of the present invention, there is provided a network digital video recorder system including a plurality of network cameras and a network digital video recorder that receives data packets transmitted from the network cameras through a network, in which each of the network camera (the nth network camera) comprises a video encoder that converts an image captured by the network camera to a digital video signal; a data compressor that compresses the digital video signal outputted from the video encoder; and a hub that multiplexes a data packet (output of the nth network camera) outputted from the data compressor and a data packet (output of the (n-1) th network camera) up-linked and outputted from a neighboring network camera (the (n-1) th network camera), and up-links the multiplexed data packets to another neighboring network camera (the (n+1) th network camera), the hub being embedded in the network camera.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

In the drawings:
FIG.1 shows the construction of a conventional network digital video recorder system.
FIG.2 shows the construction of a network camera embedded with a hub according to the present invention.
FIG.3 shows the construction of a network digital video recorder system using a network camera embedded with a hub according to the present invention.

### DETAILED DESCRIPTION OF THE INVENTION

Reference will now be made in detail to the preferred embodiments of the present invention, examples of which are illustrated in the accompanying drawings.

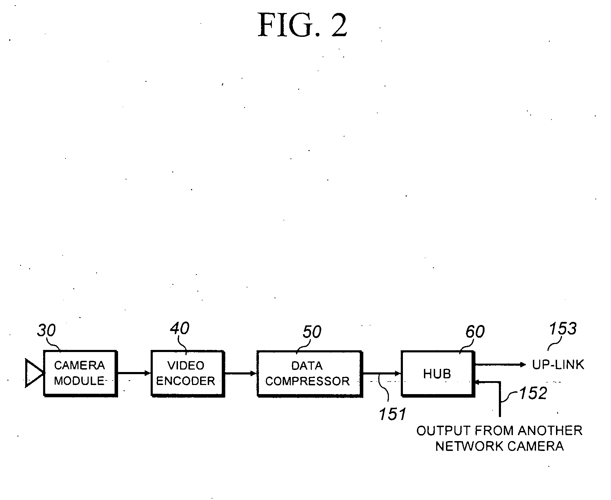

FIG.2 shows the configuration of a network camera according to the present invention. Referring to FIG.2, the network camera according to the present invention includes a camera module 30, a video encoder 40, a data compressor 50 and an embedded hub 60. The camera module 30, video encoder 40 and data compressor 50 shown in FIG.2 are identical to those of the network camera used in the conventional digital video recorder system.

The network camera shown in FIG.2 can additionally include a voice encoder (not shown) that converts a voice input signal to a digital voice signal and a voice signal compressor (not shown) to simultaneously process a compressed video signal and a compressed voice signal and transmit them. Here, the network camera can additionally have a central processing unit (not shown) for processing the compressed video signal and compressed voice signal.

That is, the network camera according to the present invention can use a signal input unit, an encoding unit and a data compression unit of a conventional network camera. Detailed explanations for these components are omitted.

The present invention is characterized by a switching hub 60 embedded in the network camera. The hub 60 multiplexes a compressed data packet 151 outputted from the data compressor 50 of the nth network camera in which the hub 60 is embedded and a compressed data packet 152 transmitted from a neighboring network camera (that is, the (n-1) th network camera) to up-link the multiplexed data packets to another neighboring network camera (that is, the (n+1) th network camera).

Accordingly, all of the network cameras can be serially connected using their embedded hubs. Furthermore, all of the network cameras can be connected to the Ethernet without using additional external hubs. For example, in the case that a 4-port hub is used in a prior art, four network cameras are grouped and connected to one hub and the output port of each hub is cascade-connected to the hub of the next stage.

However, the present invention can connect all of network cameras to one line in a ring fashion. While the hub 60 can have more than two input ports, FIG. 2 shows that the hub 60 has only two ports 151 and 152. One port 151 receives the data packet outputted from the nth network camera in which the hub 60 is embedded, and the other port 152 accepts the data packet from the adjacent network camera (the (n-1) th network camera).

As described above, the hub is embedded in the network camera so that a large number of hubs (for cascade connection) are not needed when a plurality of video cameras are connected to the Ethernet. The network cameras can be simply serially connected and up-linked to the Ethernet.

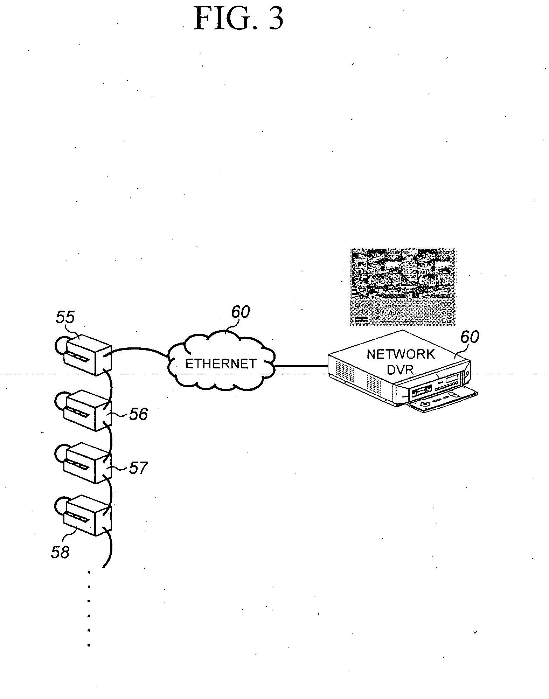

FIG.3 shows a method of connecting a plurality of network cameras to the Ethernet according to the present invention. Referring to FIG.3, each network camera is embedded with a hub including at least two input ports and an output up-link port. The up-link port of a network camera 58 is connected to the input port of an adjacent network camera 57 such that the output data packet of the network camera 58 and the output data packet of the network camera 57 are multiplexed and up-linked to another adjacent network camera 56.

In this manner, a plurality of network cameras can be connected to the Ethernet without using additional hubs. As described above, the present invention embeds a switch, which multiplexes a compressed video data packet to be transmitted to the Ethernet and a data packet outputted from a neighboring network camera, in a network camera.

Accordingly, the present invention can serially connect a plurality of network cameras, distinguished from the prior art in which the network cameras are connected in parallel using hubs. Therefore, when a network digital video recorder system is installed in a large building, the installation cost can be reduced and the system can be easily installed.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

Although the invention has been illustrated and described with respect to exemplary embodiments thereof, it should be understood by those skilled in the art that various other changes, omissions and additions may be made therein and thereto, without departing from the spirit and scope of the present invention.

Therefore, the present invention should not be understood as limited to the specific embodiment set forth above but to include all possible embodiments which can be embodies within a scope encompassed and equivalents thereof with respect to the feature set forth in the appended claims.

## Claims

1. A network digital video recorder system including a plurality of network cameras and a network digital video recorder that receives data packets transmitted from the network cameras through a network, wherein each of the network camera (the nth network camera) comprises:
a video encoder that converts an image captured by the network camera to a digital video signal;
a data compressor that compresses the digital video signal outputted from the video encoder; and
a hub that multiplexes a data packet (output of the nth network camera) outputted from the data compressor and a data packet (output of the (n-1) th network camera) up-linked and outputted from a neighboring network camera (the (n-1) th network camera), and up-links the multiplexed data packets to another neighboring network camera (the (n+1) th network camera), the hub being embedded in the network camera.

2. The network digital video recorder system as claimed in claim 1, wherein the network camera further comprises a voice encoder that converts a voice signal to a digital signal, and a data compressor that compresses the digital signal.

3. The network digital video recorder system as claimed in claims 1 and 2, wherein the network camera further comprises a central processing unit for processing the compressed video signal and compressed voice signal.
